# EUROPÄISCHE PATENTANMELDUNG

(11) **EP 4 714 556 A1**
(43) Veröffentlichungstag der Anmeldung: **25.03.2026**
(21) Anmeldenummer: 25198647.7
(22) Anmeldetag: 28.08.2025
(51) Int. Cl.: B05B 13/00, B05B 12/12, B05B 13/04, B41J 3/407, H01M 50/00, B05B 12/08

(54) **VORRICHTUNG UND VERFAHREN ZUR GERASTERTEN PROZESSANWENDUNG AN FLÄCHIGEN OBJEKTEN**

(30) Priorität: 30.08.2024 DE 102024124871
(71) Anmelder: Aumann Beelen GmbH, 48361 Beelen (DE)
(72) Erfinder: Krampe, Dominik, Beelen (DE); Sieg, Denis, Beelen (DE); Reglin, Sven, Beelen (DE)
(74) Vertreter: Schlegel, Sebastian

(57) **Zusammenfassung**

Es ist eine Vorrichtung zur gerasterten Prozessanwendung an flächigen Objekten geschaffen mit einem Grundgestell (1), einer Objektaufnahmeeinrichtung (12) zur unbewegten Aufnahme eines einer Prozessanwendung zu unterziehendes Objekts (15), einer sich in Querrichtung der Vorrichtung erstreckenden Abtastbrücke (2), einer sich in Querrichtung der Vorrichtung erstreckenden Anwendungsbrücke (3) und einer Steuereinrichtung. An der Abtastbrücke (2) ist wenigstens eine Abtasteinrichtung (6) zur Bestimmung von Objektdaten in einem Abtastabschnitt angeordnet ist, die entlang der Längsrichtung über die Länge der Objektaufnahmeeinrichtung (12) verfahrbar ist. An der Anwendungsbrücke (3) ist wenigstens eine Anwendungseinrichtung (7) zur Prozessanwendung in einem Anwendungsabschnitt eines an der Objektaufnahmeeinrichtung (12) angeordneten Objekts (15) angeordnet. Die Anwendungsbrücke (3) ist entlang der Längsrichtung über die Länge der Objektaufnahmeeinrichtung (12) verfahrbar und die Anwendungseinrichtung (7) ist an der Anwendungsbrücke (3) in der Querrichtung über zumindest einen Teil der Breite der Objektaufnahmeeinrichtung (12) verfahrbar ist. Die Steuereinrichtung ist eingerichtet, die Abtastbrücke (2) und die wenigstens eine Abtasteinrichtung (6) so anzusteuern, dass die wenigstens eine Abtasteinrichtung (6) in der Längsrichtung über die gesamte Fläche eines Objekts (15) geführt wird und hierbei Objektdaten für das gesamte Objekt (15) bestimmt, aus den Objektdaten eine ortsaufgelöste Eigenschaft des Objekts (15) an der Objektaufnahmeeinrichtung (12) zu bestimmen, und die Anwendungsbrücke (3) und die wenigstens eine Anwendungseinrichtung (7) so anzusteuern, dass die Anwendungseinrichtung (7) gemäß der aus den Objektdaten bestimmten ortsaufgelösten Eigenschaft des Objekts (15) rasterartig über das Objekt (15) bewegt wird und hierbei sequentiell zur Anwendung bestimmte Punkte des Objekts (15) einer Prozessanwendung unterzieht, wobei die Bewegung der Anwendungseinrichtung (7) in Bahnen im Wesentlichen über die gesamte Länge des Objekts (15) in der Längsrichtung erfolgt und zwischen den Bahnen eine Zustellung der Anwendungseinrichtung (7) in der Querrichtung erfolgt. Weiterhin ist ein Verfahren zur gerasterten Prozessanwendung an flächigen Objekten bereitgestellt. (Fig. 6)

## Beschreibung

Die Erfindung betrifft eine Vorrichtung sowie ein Verfahren zur gerasterten Prozessanwendung an flächigen Objekten.

### Hintergrund

Für verschiedene Anwendungen besteht die Notwendigkeit, Objekte einer gerasterten Prozessanwendung zu unterziehen. Beispielsweise beschreibt das Dokument EP 3 696 875 A1 ein Verfahren zur Aufbringung einer Isolationsschicht auf einer Kfz-Batteriezelle, bei dem mit einem flüssigen elektrisch isolierenden Beschichtungsmaterial und unter Verwendung eines Beschichtungsapplikators durch Aufbringung diskret erzeugter Einzeltropfen des Beschichtungsmaterials eine Isolationsschicht aufgebracht wird. Die Einzeltropfen bilden auf einer Außenfläche eines Gehäuses Beschichtungspunkte, welche mittels des Beschichtungsapplikators sequentiell aneinander angrenzend oder überlappend aufgebracht werden, so dass sie gemeinsam Beschichtungslinien bilden. Für das Führen von Beschichtungsapplikatoren wird die Verwendung eines Roboterarms vorgeschlagen.

### Zusammenfassung

Aufgabe der Erfindung ist es, verbesserte Technologien für die gerasterte Prozessanwendung an flächigen Objekten anzugeben, die insbesondere eine flexible, skalierbare und zeiteffiziente Prozessanwendung ermöglichen.

Zur Lösung der Aufgabe ist eine Vorrichtung zur gerasterten Prozessanwendung an flächigen Objekten nach dem unabhängigen Anspruch 1 geschaffen. Weiterhin ist ein Verfahren zur gerasterten Prozessanwendung an flächigen Objekten gemäß dem weiteren unabhängigen Anspruch 11 bereitgestellt.

Gemäß einem Aspekt ist eine Vorrichtung zur gerasterten Prozessanwendung an flächigen Objekten bereitgestellt, Die Vorrichtung weist ein Grundgestell, eine Objektaufnahmeeinrichtung, eine Abtastbrücke, eine Anwendungsbrücke und eine Steuereinrichtung auf. Die Objektaufnahmeeinrichtung ist an dem Grundgestell angeordnet und eingerichtet, ein einer Prozessanwendung zu unterziehendes Objekt während der Prozessanwendung relativ zu dem Grundgestell unbewegt aufzunehmen. Die Abtastbrücke erstreckt sich in einer Querrichtung der Vorrichtung, welche quer zu einer Längsrichtung der Vorrichtung verläuft, zwischen gegenüberliegenden Seiten des Grundgestells über der Objektaufnahmeeinrichtung. Die Anwendungsbrücke erstreckt sich in der Querrichtung zwischen gegenüberliegenden Seiten des Grundgestells über der Objektaufnahmeeinrichtung. An der Abtastbrücke ist wenigstens eine Abtasteinrichtung angeordnet. Die Abtasteinrichtung ist eingerichtet, Objektdaten zu bestimmen, welche einen Parameter angeben, der einem Abtastabschnitt eines an der Objektaufnahmeeinrichtung angeordneten Objekts zugeordnet ist, wobei sich der Abtastabschnitt über einen Teil der Länge der Objektaufnahmeeinrichtung in der Längsrichtung erstreckt. Die Abtastbrücke ist entlang der Längsrichtung über die Länge der Objektaufnahmeeinrichtung verfahrbar. An der Anwendungsbrücke ist wenigstens eine Anwendungseinrichtung angeordnet. Die Anwendungseinrichtung ist eingerichtet, einen Anwendungsabschnitt eines an der Objektaufnahmeeinrichtung angeordneten Objekts einer Prozessanwendung zu unterziehen, wobei sich der Anwendungsabschnitt über einen Teil der Länge der Objektaufnahmeeinrichtung in der Längsrichtung und über einen Teil der Breite der Objektaufnahmeeinrichtung in der Querrichtung erstreckt. Die Anwendungsbrücke entlang der Längsrichtung über die Länge der Objektaufnahmeeinrichtung verfahrbar und die Anwendungseinrichtung ist an der Anwendungsbrücke in der Querrichtung über zumindest einen Teil der Breite der Objektaufnahmeeinrichtung verfahrbar. Die Steuereinrichtung ist eingerichtet, die Abtastbrücke und die wenigstens eine Abtasteinrichtung so anzusteuern, dass die wenigstens eine Abtasteinrichtung mittels der Abtastbrücke in der Längsrichtung über die gesamte Fläche eines an der Objektaufnahmeeinrichtung angeordneten Objekts geführt wird und hierbei Objektdaten für das gesamte Objekt bestimmt, aus den Objektdaten eine ortsaufgelöste Eigenschaft des Objekts an der Objektaufnahmeeinrichtung zu bestimmen, und die Anwendungsbrücke und die wenigstens eine Anwendungseinrichtung so anzusteuern, dass die Anwendungseinrichtung gemäß der aus den Objektdaten bestimmten ortsaufgelösten Eigenschaft des Objekts rasterartig über das Objekt bewegt wird und hierbei sequentiell zur Anwendung bestimmte Punkte des Objekts einer Prozessanwendung unterzieht, wobei die Bewegung der Anwendungseinrichtung in Bahnen im Wesentlichen über die gesamte Länge des Objekts in der Längsrichtung erfolgt und zwischen den Bahnen eine Zustellung der Anwendungseinrichtung in der Querrichtung erfolgt.

Nach einem weiteren Aspekt ist ein Verfahren zur gerasterten Prozessanwendung an flächigen Objekten geschaffen, das Verfahren, umfassend das Aufnehmen eines einer Prozessanwendung zu unterziehenden Objekts an einer Objektaufnahmeeinrichtung, welche an einem Grundgestell angeordnet ist, derart, dass das Objekt unbewegt relativ zu dem Grundgestell aufgenommen ist; das Führen wenigstens einer Abtasteinrichtung, welche an einer Abtastbrücke angeordnet ist, mittels der Abtastbrücke in einer Längsrichtung über die gesamte Fläche des an der Objektaufnahmeeinrichtung angeordneten Objekts, wobei die Abtastbrücke sich in einer Querrichtung, welche quer zu der Längsrichtung verläuft, zwischen gegenüberliegenden Seiten des Grundgestells über der Objektaufnahmeeinrichtung erstreckt, die Abtasteinrichtung eingerichtet ist, Objektdaten zu bestimmen, welche einen Parameter angeben, der einem Abtastabschnitt eines an der Objektaufnahmeeinrichtung angeordneten Objekts zugeordnet ist und der Abtastabschnitt sich über einen Teil der Länge der Objektaufnahmeeinrichtung in der Längsrichtung erstreckt; das Bestimmen, während des Führens der Abtasteinrichtung über die gesamte Fläche des Objekts, von Objektdaten für das gesamte Objekt; das Bestimmen einer ortsaufgelösten Eigenschaft des Objekts aus den Objektdaten; das Bewegen wenigstens einer Anwendungseinrichtung, welche an einer Anwendungsbrücke angeordnet ist, gemäß der aus den Objektdaten bestimmten ortsaufgelösten Eigenschaft des Objekts rasterartig über das Objekt, wobei die Bewegung der Anwendungseinrichtung in Bahnen im Wesentlichen über die gesamte Länge des Objekts mittels der Anwendungsbrücke in der Längsrichtung erfolgt und zwischen den Bahnen eine Zustellung der Anwendungseinrichtung an der Anwendungsbrücke in der Querrichtung erfolgt, wobei die Anwendungsbrücke sich in der Querrichtung zwischen gegenüberliegenden Seiten des Grundgestells über der Objektaufnahmeeinrichtung erstreckt, die Anwendungseinrichtung eingerichtet ist, einen Anwendungsabschnitt eines an der Objektaufnahmeeinrichtung angeordneten Objekts einer Prozessanwendung zu unterziehen, und der Anwendungsabschnitt sich über einen Teil der Länge der Objektaufnahmeeinrichtung in der Längsrichtung und über einen Teil der Breite der Objektaufnahmeeinrichtung in der Querrichtung erstreckt; und das sequentielle einer-Prozessanwendung-Unterziehen von zur Anwendung bestimmten Punkten des Objekts.

Ein flächiges Objekt im Sinne der Offenbarung ist ein vorrangig zweidimensionales Objekt, also ein solches Objekt, welches in zwei räumlichen Dimensionen eine erheblich größere Ausdehnung aufweist als in der dritten räumlichen Dimension. Hierbei werden Objekte offenbarungsgemäß an einer Objektaufnahmeeinrichtung aufgenommen. Folglich ist ein flächiges Objekt im Sinne der Offenbarung kein als Bahn bereitgestelltes Objekt, da ein solches nicht (als solches, in seiner Gänze) an einer Objektaufnahmeeinrichtung in einer offenbarungsgemäßen Vorrichtung aufnehmbar ist, so dass die offenbarungsgemäße Erfassung von Objektdaten oder sequentielle Prozessanwendung ermöglicht ist. Zum Beispiel kann die Prozessanwendung an Objekten vorgesehen sein, die in zwei räumlichen Dimensionen Abmaße von zehn bis mehreren tausend Millimetern haben, insbesondere Abmaße von nicht weniger als 10 mm. Beispielsweise kann die Vorrichtung für die gerasterte Prozessanwendung an flächigen Objekten mit einer Fläche von 1.500 mm bis 3.000 mm mal 1.500 mm bis 3.000 mm eingerichtet sein. Besonders bevorzugt findet die offenbarungsgemäße Prozessanwendung an Objekten statt, die in der dritten (im Vergleich zu der ersten und zweiten Dimension kleineren) räumlichen Dimension Abmaße aufweist, bei der in der dritten Dimension Strukturen in Größenordnungen gebildet sein können, welche im Rahmen der offenbarungsgemäßen Prozessanwendung relevant sind. In beispielhaften Ausführungen ist die Vorrichtung für die Prozessanwendung an flächensteifen Objekten eingerichtet, also solchen Objekten, die unter Eigengewicht keine relevante Biegung erfahren.

Das Bestimmen der ortsaufgelösten Eigenschaft kann eine zwei- oder dreidimensionale geometrische Erfassung des betreffenden Objekts umfassen oder sein. Beispielsweise kann die ortsaufgelöste Eigenschaft eine Ausrichtung des Objekts sein. Hierbei kann es sich um eine globale Ausrichtung des Objekts handeln, also um die Lage des Objekts relativ zu der Vorrichtung, insbesondere dem Grundgestell und/oder der Objektaufnahmeeinrichtung. Alternativ oder zusätzliche kann eine lokale Ausrichtung des Objekts bestimmt werden, beispielsweise eine Ausrichtung einzelner Strukturen an dem Objekt und deren Verdeckung oder Nicht-Verdeckung anderer, für die Prozessanwendung relevanter Strukturen. Allgemein kann die ortsaufgelöste Eigenschaft Strukturen des betreffenden Objekts umfassen, insbesondere sich in der dritten im Vergleich zu der ersten und zweiten Dimension kleineren) räumlichen Dimension erstreckende Strukturen. Beispielsweise kann mittels des Bestimmens der Objektdaten eine Erfassung von Strukturen erfolgen, welche für eine nachfolgende Prozessanwendung störend sind, etwa durch Verdeckung von der Prozessanwendung zu unterziehenden Strukturen oder negative Beeinflussung von Mitteln der Prozessanwendung, wie elektrischen Sonden oder aufzubringenden Tinten. In diesem Sinne können auch nicht zu dem Objekt selbst gehörende Strukturen erfasst werden, beispielsweise Fremdkörper und/oder Verunreinigungen.

Die Größe der sequentiell zur Anwendung bestimmten Punkte des Objekts, also der Rasterelemente des Rasters bei der gerasterten Prozessanwendung, ist entsprechend einer gegebenen Prozessanwendung gewählt. Beispielsweise können die Punkte im Falle eines Bedruckens als Prozessanwendung in ihrer Größe aufgebrachten Tintenpunkten entsprechen und somit einen Durchmesser bzw. eine Breite im Bereich von zum Beispiel bis zu 1 Millimeter, beispielsweise zwischen 1 Mikrometer und 1 Millimeter aufweisen, während im Falle einer Bestimmung elektrischer Eigenschaften mittels einer Sonde Rasterelemente, also Punkte im Sinne der Offenbarung, mit einer Breite bzw. einem Durchmesser von etwa 1 Millimeter bis zu 50 Millimeter vorgesehen sein können. Weiterhin können die Punkte einen runden, polygonalen, unregelmäßigen oder andersartig geformten Umriss haben, beispielsweise einen im Wesentlichen linienförmigen oder einen elliptischen Umriss. Insofern können die zur Anwendung bestimmten Punkte eines Objekts im Sinne der vorliegenden Offenbarung auch allgemein als Flächenelemente aufgefasst werden, die zur Anwendung bestimmt sind.

Das Bestimmen von Objektdaten für das gesamte Objekt (unter Bewegung der Abtasteinrichtung) und das sequentielle einer-Anwendung-Unterziehen von Punkten (unter rasterartiger Bewegung der Anwendungseinrichtung) können zumindest teilweise zeitgleich erfolgen. In diesem Fall erfolgt das Bestimmen der ortsaufgelösten Eigenschaft des Objekts in Abschnitten, so dass dann die ortsaufgelöste Eigenschaft für die betreffenden Abschnitte bereits bei der rasterartigen Bewegung der Anwendungseinrichtung gemäß der ortsaufgelösten Eigenschaft Berücksichtigung finden kann, bevor das Bestimmen der ortsaufgelösten Eigenschaft für das gesamte Objekt abgeschlossen ist. Auch kann vorgesehen sein, dass das sequentielle einer-Anwendung-Unterziehen von Punkten beginnt und/oder zumindest teilweise erfolgt, während die Abtastbrücke sich nach Abschluss des Bestimmens der Objektdaten für das gesamte Objekt in eine Ausgangsstellung zurückbewegt. Somit kann es mittels der offenbarungsgemäßen Vorrichtung mit Abtastbrücke und Anwendungsbrücke ermöglicht sein, eine gerasterte Prozessanwendung an flächigen Objekten besonders zeiteffizient durchzuführen.

Die Abtastbrücke und/oder die Anwendungsbrücke können auf Seitenwänden des Grundgestells aufliegen und auf den Seitenwänden in der Längsrichtung verfahrbar sein. Alternativ können die Abtastbrücke und/oder die Anwendungsbrücke als jeweiliges Portal ausgestaltet sein, welches sich von einer Grundfläche des Grundgestells nach oben erstreckende Stützen und einen sich zwischen den Stützen in der Querrichtung erstreckenden Querträger aufweisen, wobei dann das Portal in der Längsrichtung an dem Grundgestellt verfahrbar ist. In Ausgestaltungen können die Abtastbrücke und die Anwendungsbrücke derart ausgestaltet sein, dass sie sich überschneidend übereinander verfahrbar sind, beispielsweise dadurch, dass eine der Brücken breiter ausgestaltet und auf zusätzlichen, sich von den Seitenwänden des Grundgestells nach oben erstreckenden Stützen angeordnet ist oder dadurch, dass Portale der Brücken in unterschiedlicher Größe ausgestaltet sind, so dass eine der Brücken durch die andere Brücke hindurch verfahren werden kann.

In einer bevorzugten Ausgestaltung ist die Objektaufnahmeeinrichtung für eine Zuführung eines einer Prozessanwendung zu unterziehenden Objekts in der Längsrichtung eingerichtet. Alternativ kann eine Zuführung in der Querrichtung vorgesehen sein, wobei in diesem Fall sichergestellt sein muss, dass eine Kollision mit der Abtastbrücke und/oder der Anwendungsbrücke vermieden ist, beispielsweise dadurch, dass die Zuführung durch eine Aussparung einer Seitenwand des Grundgestells hindurch erfolgt oder dadurch, dass eine Zuführung nur dann erfolgt, wenn die (insbesondere als jeweiliges Portal ausgestaltete) Abtastbrücke und die Anwendungsbrücke in Positionen verfahren sind, in denen eine Kollision mit einem zuzuführenden Objekt ausgeschlossen ist.

Die Vorrichtung kann eine Zuführeinrichtung aufweisen, welche eingerichtet ist, der Objektaufnahmeeinrichtung ein einer Prozessanwendung zu unterziehendes Objekt in der Längsrichtung zuzuführen. In alternativen Ausgestaltungen kann eine Zuführeinrichtung für Zuführung eines einer Prozessanwendung zu unterziehenden Objekts in der Querrichtung vorgesehen sein. Die Zuführeinrichtung kann als Rollenförderer ausgestaltet sein, bei dem das Objekt auf Rollen der Zuführeinrichtung bewegt wird. Hierbei kann der Rollenförderer mit passiven Rollen ausgestaltet sein, auf denen das Objekt zur Einführung eingeschoben werden kann. Der Rollenförderer kann angetriebene Rollen aufweisen, mittels derer eine Bewegung des Objekts bei der Zuführung erzeugt wird. Hierbei können einzelne oder alle Rollen des Rollenförderers angetrieben sein. Alternativ oder zusätzlich zu einem Rollenförderer kann die Zuführeinrichtung eine Bandfördereinrichtung ("Laufband") aufweisen. Alternativ oder zusätzlich kann die Zuführeinrichtung einen Roboter für ein robotisches Beladen der Vorrichtung, beispielsweise einen Roboterarm für das Zuführen des Objekts mittels eines Pick-and-Place-Vorgangs.

Die Objektaufnahmeeinrichtung kann Haltemittel zur Fixierung eines einer Prozessanwendung zu unterziehenden Objekts an der Objektaufnahmeeinrichtung aufweisen. Beispielsweise können die Haltemittel mit Aussparungen gebildet sein, in welche Ausformungen des Objekts eingepasst werden. Das Objekt kann in einer Hilfseinrichtung aufgenommen sein, welche die in den Aussparungen aufzunehmenden Ausformungen aufweist. Es kann eine einzige Aussparung als Haltemittel gebildet sein, in welche das Objekt eingepasst und hierdurch gesichert wird. Alternativ können die Haltemittel mit Ausformungen und das Objekt bzw. die Hilfseinrichtung mit entsprechenden Aussparungen gebildet sein. Beispielsweise können die Haltemittel mit ausfahrenden Indexierbolzen an der Objektaufnahmeeinrichtung gebildet sein, welche von unten in Aussparungen, insbesondere Bohrungen des Objekts bzw. der Hilfseinrichtung eintauchen. Haltemittel können eine Rastvorrichtung aufweisen, um eine Positionierung zu fixieren und/oder ein Verlieren zu verhindern. In alternativen Ausgestaltungen können die Haltemittel als Vakuumeinrichtung ausgebildet sein, bei der an mehreren Öffnungen ein Unterdruck angelegt werden kann, welcher das Objekt an der Vakuumeinrichtung hält. Als weitere Alternative können die Haltemittel als Klammern, Verschraubungen oder andere derartige mechanische Haltevorrichtungen ausgestaltet sein.

Alternativ zu Haltemitteln kann die Objektaufnahmeeinrichtung eingerichtet sein, ein einer Prozessanwendung zu unterziehendes Objekt während der Prozessanwendung ohne zusätzliche Haltemittel relativ zu dem Grundgestell unbewegt aufzunehmen. Beispielsweise kann bei gegebenen Eigenschaften, insbesondere hinsichtlich Formgebung und Masse, eines Objekts die Objektaufnahmeeinrichtung, beispielsweise durch geeignete Materialwahl, eingerichtet sein, das Objekt allein durch Reibungswirkung unter Schwerkraft während der Prozessanwendung relativ zu dem Grundgestell unbewegt aufzunehmen.

Die Objektaufnahmeeinrichtung kann eingerichtet sein, ein Objekt relativ zu der Vorrichtung zu positionieren. Beispielsweise können an der Objektaufnahmeeinrichtung Anschläge zur Positionierung des Objekts vorgesehen sein. Insbesondere kann vorgesehen sein, dass Haltemittel ein einer Prozessanwendung zu unterziehendes Objekt sowohl Positionieren als auch Fixieren.

Die Objektaufnahmeeinrichtung kann einen Hubtisch aufweisen, an dem ein einer Prozessanwendung zu unterziehendes Objekt, beispielsweise unter Verwendung von an dem Hubtisch angeordneten Haltemitteln, aufgenommen und anschließend nach oben in Richtung der Abtastbrücke und der Anwendungsbrücke bewegt wird. Der Hubtisch kann das Objekt somit in eine Anwendungsposition befördern. Alternativ oder zusätzlich kann vorgesehen sein, dass mittels des Hubtischs während des Bestimmens von Objektdaten für das gesamte Objekt und/oder während einer rasterartigen Prozessanwendung mittels der Anwendungseinrichtung eine Zustellung des Objekts senkrecht zu der Längsrichtung und zu der Querrichtung erfolgt, beispielsweise, um einen für die Bestimmung von Objektdaten und/oder für die Prozessanwendung notwendigen Abstand des Objekts zu der Abtasteinrichtung bzw. der Anwendungseinrichtung bei lokal variabler Höhe des Objekts sicherzustellen.

Die Bewegung der Abtastbrücke, die Bewegung der Anwendungsbrücke und/oder die Bewegung der Anwendungseinrichtung kann mittels wenigstens eines zugeordneten Servomotors entlang einer zugeordneten Linearführung erfolgen. Beispielsweise können jeweilige mit Servomotoren Angetriebene Kugelumlaufspindeln vorgesehen sein. Alternative können andere als solche bekannte Ausgestaltungen von Linearführungen mit entsprechenden Antrieben zum Einsatz kommen. Als Alternative zu Servomotoren können die Linearbewegungen durch Lineardirektantriebe, beispielsweise elektrische Lineardirektantriebe oder pneumatische oder hydraulische Antriebe, oder alternative Drehantriebe, beispielsweise Schrittmotoren, mit entsprechender Mechanik zur Umsetzung in eine Linearbewegung, bereitgestellt werden.

Die wenigstens eine Abtasteinrichtung kann eine optische Erfassungseinrichtung aufweisen. Beispielsweise kann die optische Erfassungseinrichtung einen optischen Abstandsmesser, zum Beispiel einen Lasertriangulations-Sensor, eine Videokamera und/oder eine Fotokamera umfassen. Entsprechend kann die Abtasteinrichtung in Ausgestaltungen eingerichtet sein, Objektdaten zu bestimmen, welche auf einer Tiefeninformation, einer Farbinformation und/oder einer Kantenverlaufsinformation basieren. Im Falle einer Tiefeninformation können die Objektdaten eine Oberflächenstruktur des Objekts angeben. Im Falle von Farbinformation können die Objektdaten Fehlstellen an der Oberfläche des Objekts angeben, welche über Farbkontraste ermittelt wurden. Alternativ oder zusätzlich zu einer optischen Erfassungseinrichtung kann die Abtasteinrichtung eine andersartige Erfassungseinrichtung aufweisen, zum Beispiel einen elektrische Erfassungseinrichtung wie einen Wirbelstromsensor.

In weiteren Ausgestaltungen kann die Abtasteinrichtung eine mechanische Erfassungseinrichtung, beispielsweise einen mechanischen Härtegradmesser zur ortsaufgelösten Härtebestimmung, oder eine akustische Erfassungseinrichtung (beispielsweise für eine Ultraschallmessung) aufweisen.

Allgemein können die Objektdaten also einen einem Abtastabschnitt zugeordneten Parameter angeben, der mehrere Parameter im mathematischen Sinne und somit einen Parametersatz umfasst. Beispielsweise kann der Parameter Koordinaten oder Abstände in ein, zwei oder drei Raumrichtungen und/oder als einen oder mehrere Winkel angeben. Alternativ oder zusätzlich kann der Parameter eine oder mehrere Farbinformation, beispielsweise Koordinaten in einem Farbraum, angeben.

Es können mehrere Abtasteinrichtungen in zueinander fester Ausrichtung vorgesehen sein, die analog einer einzigen Abtasteinrichtung miteinander bewegt werden. Alternativ oder zusätzlich kann eine Abtasteinrichtung mit mehreren, zum Beispiel optischen, Erfassungseinrichtungen gebildet sein, die insbesondere in der Abtasteinrichtung eine feste Ausrichtung zueinander haben können.

Der Abtastabschnitt kann sich über einen Teil der Breite der Objektaufnahmeeinrichtung in der Querrichtung erstrecken, wobei dann die Abtasteinrichtung an der Abtastbrücke in der Querrichtung über zumindest einen Teil der Breite der Objektaufnahmeeinrichtung verfahrbar ist und die Steuereinrichtung eingerichtet ist, die Abtastbrücke und die wenigstens eine Abtasteinrichtung so anzusteuern, dass die wenigstens eine Abtasteinrichtung in der Längsrichtung und in der Querrichtung rasterartig über die gesamte Fläche des an der Objektaufnahmeeinrichtung angeordneten Objekts geführt wird und hierbei Objektdaten für das gesamte Objekt bestimmt. Hiermit kann für die Abtasteinrichtung eine zu der Anwendungseinrichtung analoge rasterartige Erfassung von Objektdaten vorgesehen sein. Hierbei wird die die wenigstens eine Abtasteinrichtung insgesamt wenigstens einmal in der Längsrichtung über die gesamte Fläche eines an der Objektaufnahmeeinrichtung angeordneten Objekts geführt, wobei dies auch in Teilabschnitten erfolgen kann. Insbesondere kann für den Abtastabschnitt eine Bewegung in Bahnen im Wesentlichen über die gesamte Länge des Objekts in der Längsrichtung und zwischen den Bahnen eine Zustellung in der Querrichtung erfolgen oder es kann eine Bewegung in Bahnen im Wesentlichen über die gesamte Breite des Objekts in der Querrichtung und zwischen den Bahnen eine Zustellung in der Längsrichtung vorgesehen sein. Als weitere Alternative können für die Abtasteinrichtung andere Bewegungsmuster vorgesehen sein, beispielsweise eine gleichzeitige Bewegung in Längs- und Querrichtung schräg über das Objekt.

Die wenigstens eine Anwendungseinrichtung kann einen Drop-on-Demand-Druckkopf aufweisen und eingerichtet sein, als Prozessanwendung einen jeweiligen Tintenpunkt an einem bestimmten Punkt eines einer Prozessanwendung zu unterziehenden Objekts aufzubringen. Drop-on-Demand-Druckköpfe sind als solches aus dem Stand der Technik bekannt. Alternativ zu einem Drop-on-Demand-Druckkopf kann ein anderer Druckkopf, beispielsweise ein ebenfalls als solches bekannter Continuous-Inkjet-Druckkopf, vorgesehen sein. Aufgebrachte Tintenpunkte können einen Durchmesser bis zu 1 mm, beispielsweise zwischen 0,1 mm und 1 mm, zum Beispiel zwischen 0,6 und 0,9 mm, haben. Ein Druckkopf der Anwendungseinrichtung kann mit mehreren Druckdüsen gebildet sein, welche jeweils zum Ausbringen eines Tintenpunkts eingerichtet sind.

Als Tinte im Sinne der Offenbarung ist jede Substanz zu verstehen, welche in einem Druckverfahren auf das Objekt aufbringbar ist. Hierbei kann die Tinte zur visuellen Markierung des Objekts mit Pigmenten versehen oder anderweitig gefärbt sein. Alternativ kann die Tinte nach dem Aufbringen eine andere Funktion bereitstellen, beispielsweise eine gewünschte Oberflächenstruktur, eine Isolationsschicht oder Haftschicht, eine Spiegelschicht oder andere sich durch gezielt gewähltes reflektierendes oder absorbierendes Verhalten der Tinte einstellende Schicht und/oder eine elektrische Funktionsschicht, beispielsweise bezüglich einer elektrischen Isolierung oder einer gewünschten Permeabilität (beispielsweise für die Herstellung von Brennstoffzellen oder Photovoltaik-Zellen). Insofern kann die Tinte mit einem Pigmente transportierenden Lösungsmittel, einem Natur- oder Kunstharz, einem Polymer und/oder einem anderen Material gebildet sein.

Es können mehrere Anwendungseinrichtungen vorgesehen sein, die entlang der Querrichtung nebeneinander angeordnet sind und jeweils einen Drop-on-Demand-Druckkopf (oder mehrere Drop-on-Demand-Druckköpfe) aufweisen, wobei die Steuereinrichtung eingerichtet ist, die Anwendungseinrichtungen in Bahnen im Wesentlichen über die gesamte Länge des Objekts in der Längsrichtung zu bewegen und zwischen den Bahnen eine Zustellung der Anwendungseinrichtungen in der Querrichtung zu veranlassen, wobei die Drop-on-Demand-Druckköpfe eingerichtet sind, als Prozessanwendung einen jeweiligen Tintenpunkt an einem jeweiligen bestimmten Punkt des Objekts aufzubringen. Alternativ zu Drop-on-Demand-Druckköpfen können auch in derartigen Ausgestaltungen andere Druckköpfe vorgesehen sein. Bezüglich der mehreren Druckköpfe können die vorangehend mit Bezug zu einem Druckkopf ausgeführten Ausgestaltungen entsprechend vorgesehen sein.

In beispielhaften Ausgestaltungen kann die Prozessanwendung an einem Batteriesystem mit einer Anordnung von Batteriezellen mittels der offenbarungsgemäßen Vorrichtung vorgesehen sein. Hierbei kann eine Tinte punktweise auf das Batteriesystem aufgebracht werden, beispielsweise auf eine Oberseite des Batteriesystems. Es kann vorgesehen sein, dass die Objektdaten eine Ausrichtung des Batteriesystems zu der Vorrichtung angeben und eine Bewegung gemäß der aus den Objektdaten bestimmten ortsaufgelösten Eigenschaft des Objekts insbesondere den Ausgleich einer Abweichung von einer Parallelität einer Seitenfläche des Batteriesystem zu der Längsrichtung der Vorrichtung umfasst.

In alternativen Ausgestaltungen kann die wenigstens eine Anwendungseinrichtung einen oder mehrere Laserbearbeitungsköpfe aufweisen, welche zur Laserbearbeitung eines Objekts eingerichtet sind.

Die wenigstens eine Anwendungseinrichtung kann eine Sonde aufweisen, welche eingerichtet ist, als Prozessanwendung eine Datenerfassung an einem bestimmten Punkt eines einer Prozessanwendung zu unterziehenden Objekts durchzuführen. In derartigen Ausgestaltungen kann ein bestimmter Punkt, im Vergleich zu einem Tintenpunkt bei einer als Druckkopf ausgestalteten Anwendungseinrichtung, eine Größe von bis zu 50 mm mal 50 mm aufweisen. Eine Sonde kann eine berührende (taktile) oder eine nicht-berührende (kontaktfreie) Sonde sein. Beispielsweise kann die wenigstens eine Anwendungseinrichtung eine elektrische Sonde sein, wobei die Objektdaten zum Beispiel einen lokalen (Innen-)Widerstand, eine lokale Leitfähigkeit und/oder ein Ergebnis eines Hochspannungstests angeben. Eine elektrische Sonde kann berührend oder kontakfrei, beispielsweise induktiv, sein. Die Anwendungseinrichtung kann eine Sonde zur Bestimmung einer lokalen Schichtdicke aufweisen, beispielsweise berührend mittels Widerstandsbestimmung oder nicht-berührend, etwa mittels Weißlichtinterferometrie.

Die Anwendungseinrichtung kann mehrere Sonden aufweisen. Es können mehrere Anwendungseinrichtungen vorgesehen sein, die entlang der Querrichtung nebeneinander angeordnet sind und jeweils eine Sonde (oder mehrere Sonden) aufweisen. Bezüglich der mehreren Sonden können die vorangehend mit Bezug zu einer Sonde ausgeführten Ausgestaltungen entsprechend vorgesehen sein.

Die wenigstens eine Abtasteinrichtung kann weiterhin eingerichtet sein, weitere Objektdaten zu bestimmen, welche einen weiteren Parameter angeben, der dem Abtastabschnitt zugeordnet ist, wobei dann die Steuereinrichtung eingerichtet ist, anschließend an die Prozessanwendung die Abtastbrücke und die wenigstens eine Abtasteinrichtung so anzusteuern, dass die wenigstens eine Abtasteinrichtung mittels der Abtastbrücke in der Längsrichtung über die gesamte Fläche des an der Objektaufnahmeeinrichtung angeordneten Objekts geführt wird und hierbei weitere Objektdaten für das gesamte Objekt bestimmt, und die Steuereinrichtung weiter eingerichtet ist, anhand der weiteren Objektdaten, beispielsweise mittels eines Vergleichs mit den zuvor bestimmten Objektdaten, zu bestimmen, ob die Prozessanwendung erfolgreich war. Entsprechend kann das offenbarungsgemäße Verfahren anschließend an die Prozessanwendung das Führen der Abtasteinrichtung mittels der Abtastbrücke in der Längsrichtung über die gesamte Fläche des Objekts, hierbei das Bestimmen weiterer Objektdaten für das gesamte Objekt mittels der Abtasteinrichtung, wobei die weiteren Objektdaten einen weiteren Parameter angeben, der dem Abtastabschnitt zugeordnet ist, und das Bestimmen anhand der weiteren Objektdaten umfassen, ob die Prozessanwendung erfolgreich war. Beispielsweise kann im Falle eines Bedruckens des Objekts im Anschluss an die Prozessanwendung (das Bedrucken) bestimmt werden, ob alle (und/oder nur die) zu bedruckenden Bereiche die verwendete Tinten aufweisen. Beispielsweise kann dies über eine optischen Senor erfolgen, etwa mittels Farbbestimmung (bei farbiger Tinte) oder über eine Bestimmung eines Reflexionsgrads, der sich bei noch feuchter Tinte im Vergleich zu nicht von Tinte benetzten Bereichen unterscheidet. In beispielhaften Ausgestaltungen ist auch eine Bestimmung über eine elektrische Abtasteinrichtung denkbar, beispielsweise bei Bedrucken mit einer Tinte, die eine andere elektrische Leitfähigkeit aufweist, als der zu bedruckende Untergrund. Auch eine Schichtdickenmessung kann zur Bestimmung dienen, ob die Prozessanwendung erfolgreich war.

Das Verfahren kann umfassen, in Reaktion auf das Bestimmen ob die Prozessanwendung erfolgreich war, falls die Prozessanwendung nicht erfolgreich war, das Bewegen der wenigstens einen Anwendungseinrichtung, das sequentielle Unterziehen von zur Anwendung bestimmten Punkten des Objekts einer Prozessanwendung und das Bestimmen, ob die Prozessanwendung erfolgreich war, iterativ zu wiederholen, und, falls die Prozessanwendung erfolgreich war, die Prozessanwendung zu beenden. Entsprechend kann in der Vorrichtung die Steuereinrichtung eingerichtet sein, die Komponenten der Vorrichtung so anzusteuern, dass im Falle einer nicht erfolgreichen Prozessanwendung diese iterativ wiederholt wird und im Falle einer erfolgreichen Prozessanwendung die Prozessanwendung beendet wird. Hierbei kann das iterative Wiederholen auch weitere Schritte des Verfahrens umfassen, insbesondere auch zum Bestimmen von Objektdaten, wobei dann die Bewegung der wenigstens einen Anwendungseinrichtung entsprechend den neu bestimmten Objektdaten erfolgt. Alternativ oder zusätzlich kann die Bewegung der wenigstens einen Anwendungseinrichtung entsprechend den weiteren Objektdaten erfolgen. Bei der iterativen Prozessanwendung kann die Prozessanwendung entsprechend eines bestimmten Misserfolgs angepasst werden. Es kann beispielsweise bei einem Drucken als Prozessanwendung vorgesehen sein, bei einer Wiederholung des Druckens nur solche Bereiche zu bedrucken, in denen nicht bereits Tinte gemäß einem vorgegebenen Druckbild erfolgreich aufgebracht wurde (also Bereiche ohne Tintenauftrag und/oder Bereiche mit falschem Tintenauftrag), und solche Bereiche von der Iteration der Prozessanwendung auszunehmen, in denen das vorgegebene (Teil-)Druckbild bereits erfolgreich aufgebracht wurde. Das Beenden der Prozessanwendung kann ein Freigeben des Objekts von der Objektaufnahmeeinrichtung und gegebenenfalls ein Wegführen des Objekts, beispielsweise mittels einer Zuführeinrichtung oder mittels einer separat gebildeten Abführeinrichtung, umfassen.

Die im vorangehend im Zusammenhang mit der Vorrichtung zur gerasterten Prozessanwendung an flächigen Objekten beschriebenen Ausführungen können für das Verfahren entsprechend zur Anwendung kommen und umgekehrt.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Vorrichtung zur gerasterten Prozessanwendung an flächigen Objekten;
- Fig. 2: eine schematische Darstellung der Vorrichtung aus Fig. 1 in einer Ansicht von hinten;
- Fig. 3: eine schematische Darstellung der Vorrichtung aus Fig. 1 in einer Ansicht von vorne;
- Fig. 4: eine schematische Darstellung der Vorrichtung aus Fig. 1 mit Blick auf eine Aufnahmevorrichtung;
- Fig. 5: eine schematische Seitenansicht der Vorrichtung aus Fig. 1;
- Fig. 6: eine schematische Darstellung der Vorrichtung aus Fig. 1 mit ausgeblendeter Seitenwand;
- Fig. 7: eine schematische Darstellung einer weiteren Vorrichtung zur gerasterten Prozessanwendung an flächigen Objekten;
- Fig. 8: eine schematische Darstellung der Vorrichtung aus Fig. 7 in einer Ansicht von hinten;
- Fig. 9: eine schematische Darstellung der Vorrichtung aus Fig. 7 in einer Ansicht von vorne;
- Fig. 10: eine schematische Darstellung der Vorrichtung aus Fig. 7 mit Blick auf eine Aufnahmevorrichtung;
- Fig. 11: eine schematische Darstellung der Vorrichtung aus Fig. 7 mit ausgeblendeter Seitenwand;

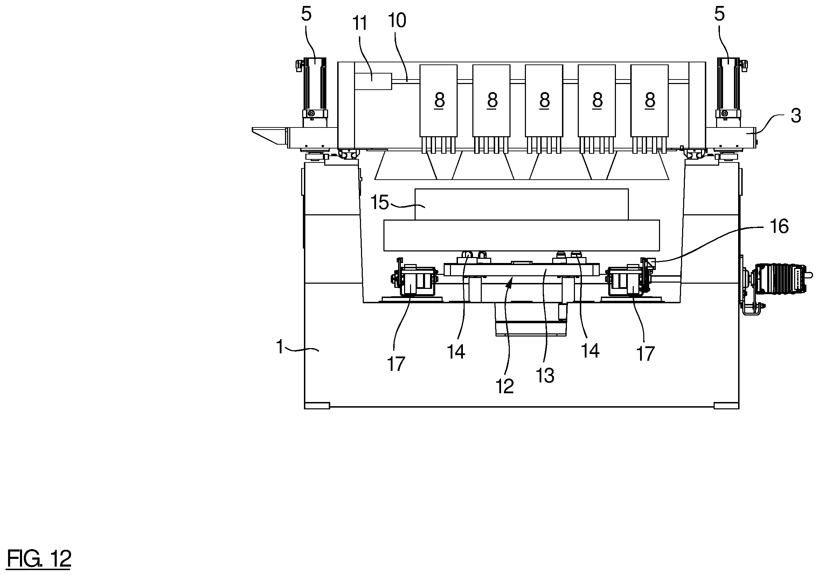

- Fig. 12: eine schematische Darstellung der Vorrichtung aus Fig. 7 mit aktiviertem Hubtisch von vorne;

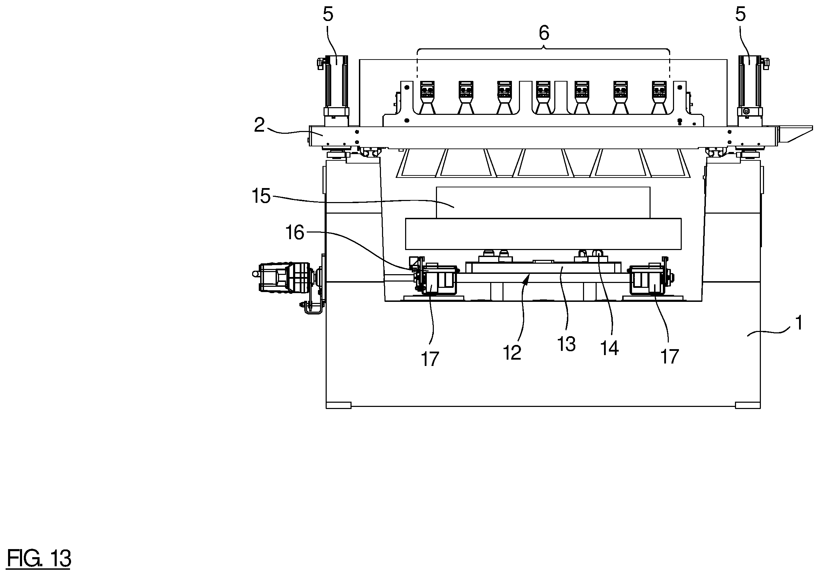

- Fig. 13: eine schematische Darstellung der Vorrichtung aus Fig. 7 mit aktiviertem Hubtisch von hinten; und
- Fig. 14: ein Blockdiagramm eines Verfahrens zur gerasterten Prozessanwendung an flächigen Objekten.

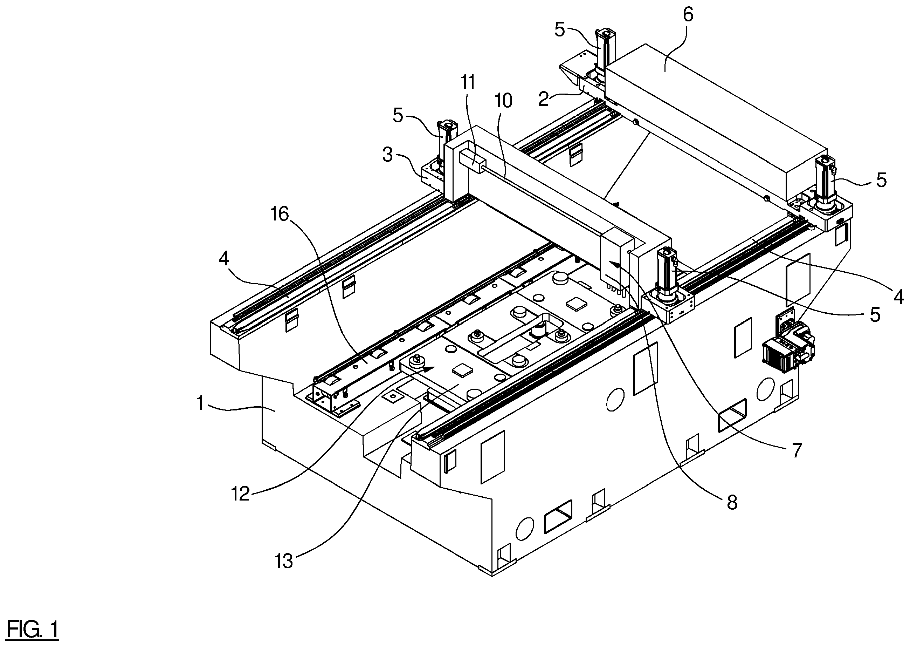

Die Fig. 1 zeigt eine Vorrichtung zur gerasterten Prozessanwendung an flächigen Objekten. Zwischen zwei Seitenwänden eines Grundgestells 1 der Vorrichtung und auf diesen angeordnet erstrecken sich eine Abtastbrücke 2 und eine Anwendungsbrücke 3 in einer Querrichtung der Vorrichtung. Die Abtastbrücke 2 und die Anwendungsbrücke 3 sind jeweils auf Linearführungen 4 entlang einer Längsrichtung der Vorrichtung verfahrbar. Für den jeweiligen Antrieb dieser Längsbewegung sind an der Abtastbrücke 2 und der Anwendungsbrücke 3 jeweilige Servomotoren 5 angeordnet.

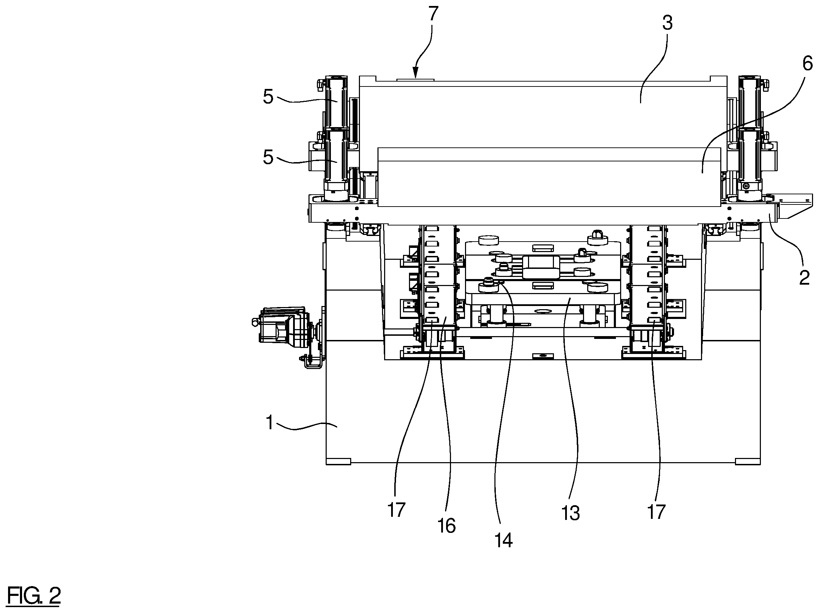

Wie in der Rückansicht der Fig. 2 zu erkennen, ist an der Abtastbrücke 2 eine Abtasteinrichtung 6 angeordnet. In der gezeigten Ausführung ist die Abtasteinrichtung 6 mit einem über die gesamte Breite der Abtastbrücke 2 arbeitenden Triangulationssensor gebildet. In alternativen Ausgestaltungen können als Abtasteinrichtung 6 andere Sensoren vorgesehen sein.

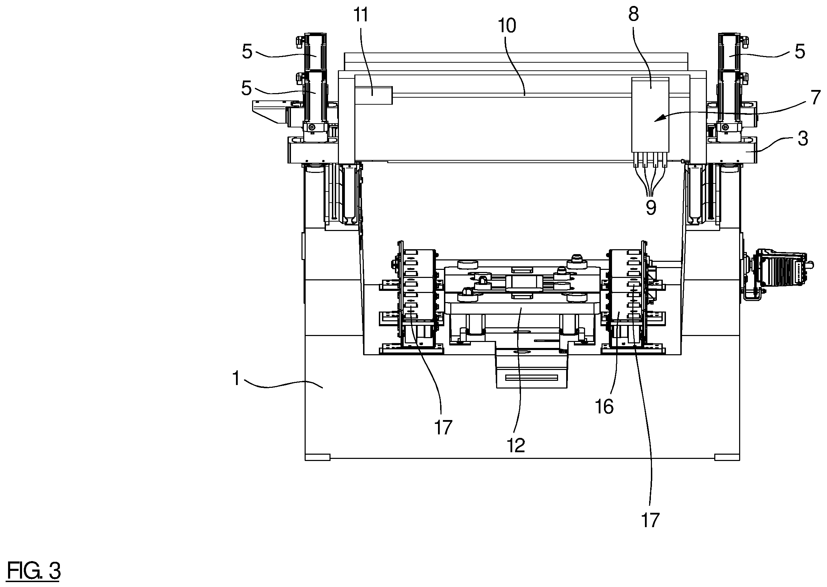

Die Fig. 3 zeigt eine Frontalansicht, in der eine an der Anwendungsbrücke 3 angeordnete Anwendungseinrichtung 7 erkennbar ist. In der gezeigten Ausführung handelt es sich bei der Anwendungseinrichtung um einen Drop-on-Demand-Druckkopf 8, der mehrere Druckdüsen 9 zum Ausstoß von Tintentropfen aufweist. Der Druckkopf 8 ist an einer Linearführung 10 angeordnet und mittels eines Servomotors 11 über die gesamte Breite der Anwendungsbrücke 3 verfahrbar, so dass mittels der Druckdüsen 9 eine gesamte Arbeitsbreite der Vorrichtung erfassbar, also bedruckbar, ist. Somit ist die Anwendungseinrichtung 7 eingerichtet, ein in der Vorrichtung angeordnetes Objekt einer Prozessanwendung zu unterziehen, bei der es sich um das Bedrucken durch Aufbringen von Tintentropfen handelt. In alternativen Ausgestaltungen sind andere mittels der Anwendungseinrichtung 7 auszuführende Prozessanwendungen vorgesehen. Beispielsweise kann als Anwendungseinrichtung 7 eine elektrische Messeinrichtung mit Messsonden für das Bestimmen einer elektrischen Messgröße, zum Beispiel Widerstand oder Durchschlagfestigkeit, bereitgestellt sein.

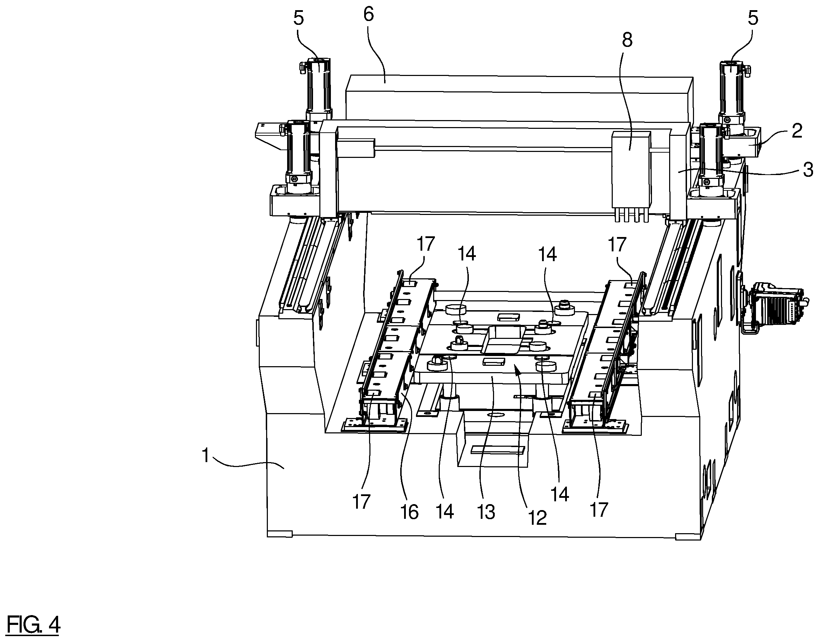

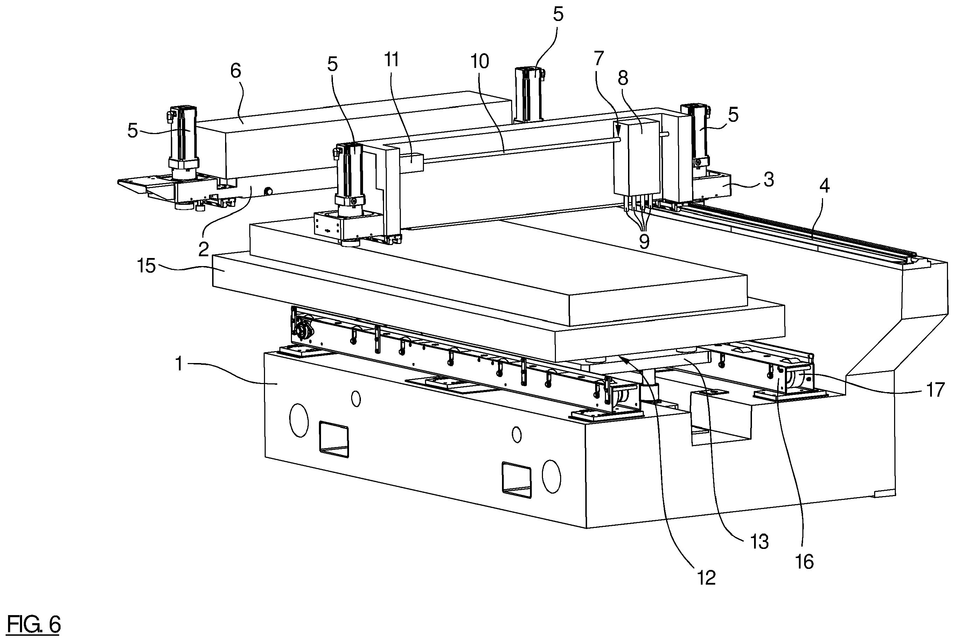

Die Fig. 4 zeigt eine Ansicht der Vorrichtung zur gerasterten Prozessanwendung an flächigen Objekten, in der eine Objektaufnahmeeinrichtung 12 der Vorrichtung erkennbar ist. Die Objektaufnahmeeinrichtung 12 ist mit einem Hubtisch 13 gebildet, an dem Haltemittel 14 in Form von ausfahrenden Indexierbolzen angeordnet sind, welche in Aussparungen eines zu bedruckenden Objekts 15 eingeführt werden können (siehe Fig. 6). Für die Zuführung eines Objekts 15 ist eine Zuführeinrichtung 16 in Form einer Rollenförderers mit Rollen 17 zur Bewegung eines Objekts 15 vorgesehen.

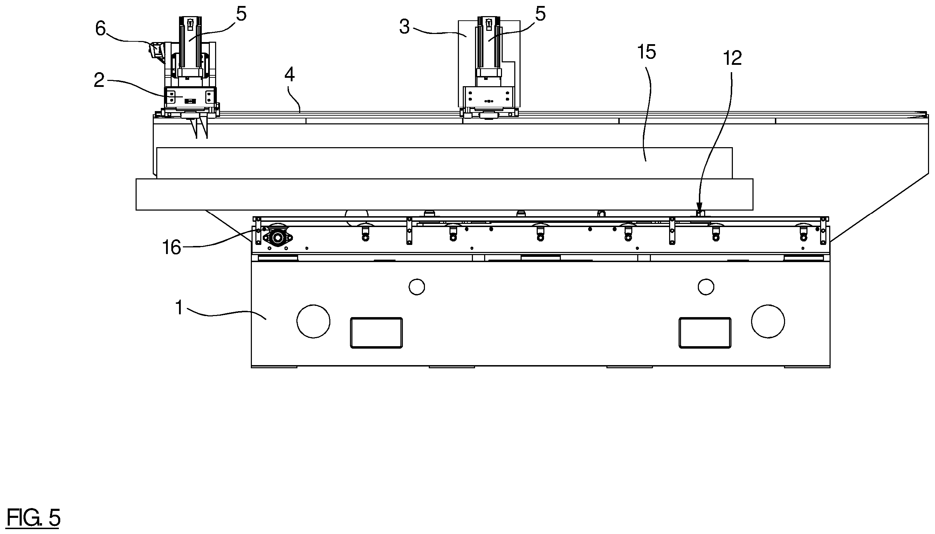

Die Fig. 5 ist eine Seitenansicht der Vorrichtung. Es ist zu erkennen, dass die Abtastbrücke 2 und die Anwendungsbrücke 3 auf den Linearführungen 4 relativ zu dem Grundgestell 1 und relativ zueinander verfahrbar sind.

In der Darstellung der Fig. 6 ist eine der Seitenwände ausgeblendet, so dass ein an der Objektaufnahmeeinrichtung 12 aufgenommenes Objekt 15 zu erkennen ist. Das Objekt 15 ist flächig, weist also in der Längsrichtung und der Querrichtung der Vorrichtung eine deutliche größere Ausdehnung auf als in einer dritten Dimension, nämlich der Höhe des Objekts 15. In Aussparungen des Objekts 15 sind Indexierbolzen der Haltemittel 14 aufgenommen, so dass das Objekt 15 relativ zu der Objektaufnahmeeinrichtung 12 unbeweglich an dieser aufgenommen ist. Der Hubtisch 13 ist nach oben ausgelenkt, so dass das Objekt 15 auf einen geeigneten Abstand zu der Abtasteinrichtung 6 und der Anwendungseinrichtung 7 gebracht ist. Mittels einer nicht dargestellten Steuereinrichtung der Vorrichtung kann nun zunächst die Abtastbrücke 2 in der Längsrichtung über das gesamte Objekt 15 verfahren werden und hierbei die Abtasteinrichtung Objektdaten des Objekts 15 bestimmen, die ein Oberflächenprofil des Objekts 15 sowie eine Ausrichtung des Objekts 15 relativ zu der Vorrichtung angeben. Anhand dieser Objektdaten werden dann Ansteuerungsdaten für ein Bedrucken des Objekts 15 unter Berücksichtigung der tatsächlichen Ausrichtung sowie der Oberflächenstruktur des Objekts 15 (insbesondere im Hinblick auf eine eventuelle Verdeckung von Strukturen durch andere Strukturen) errechnet. Mittels dieser Ansteuerungsdaten wird dann die Anwendungsbrücke 3 angesteuert, um die Anwendungseinrichtung 7 über die gesamte Länge des Objekts 15 in der Längsrichtung zu verfahren und hierbei an den genwünschten Punkten aus den Druckdüsen 9 einen jeweiligen Tintentropfen auszustoßen. Nach einer solchen Bahnbewegung wird die Anwendungseinrichtung 7 in der Querrichtung verfahren (zugestellt) und mit der Anwendungsbrücke 3 die Anwendungseinrichtung 7 über die gesamte Länge des Objekts 15 in entgegengesetzter Richtung entlang der Längsrichtung zurückverfahren. Dies wird wiederholt, bis die gesamte Oberfläche des Objekts 15 erfasst und gemäß einem vorgegebenen Druckbild bedruckt wurde.

In Ausgestaltungsvarianten kann anschließend wiederum die Abtastbrücke 2 in der Längsrichtung über das gesamte Objekt 15 verfahren werden und hierbei die Abtasteinrichtung Objektdaten des Objekts 15 bestimmen, die ein (geändertes) Oberflächenprofil des Objekts 15 angeben. Auf diese Weise kann eine Schichtdicke des Drucks und somit ein Erfolg der Prozessanwendung bestimmt werden. Alternativ oder zusätzlich kann mittels der Abtasteinrichtung 6 ein Reflexionsgrad an verschiedenen auf der Oberfläche des Objekts 15 verteilten Punkten bestimmt werden. Anhand eines aufgrund der feuchten Tinte an der Oberfläche geänderten Reflexionsgrads kann dann bestimmt werden, ob das gewünschte Druckbild erfolgreich aufgebracht wurde.

In einer alternativen Ausgestaltung kann sich die Abtasteinrichtung 6 nur über einen Teil der Breite der Vorrichtung erstrecken und nur einen Breitenabschnitt eines Objekts 15 erfassen, wobei die Abtasteinrichtung dann zu Erfassung der gesamten Breite des Objekts 15 analog zu der Anwendungseinrichtung 7 in der Querrichtung verfahrbar an der Abtastbrücke 2 angeordnet ist.

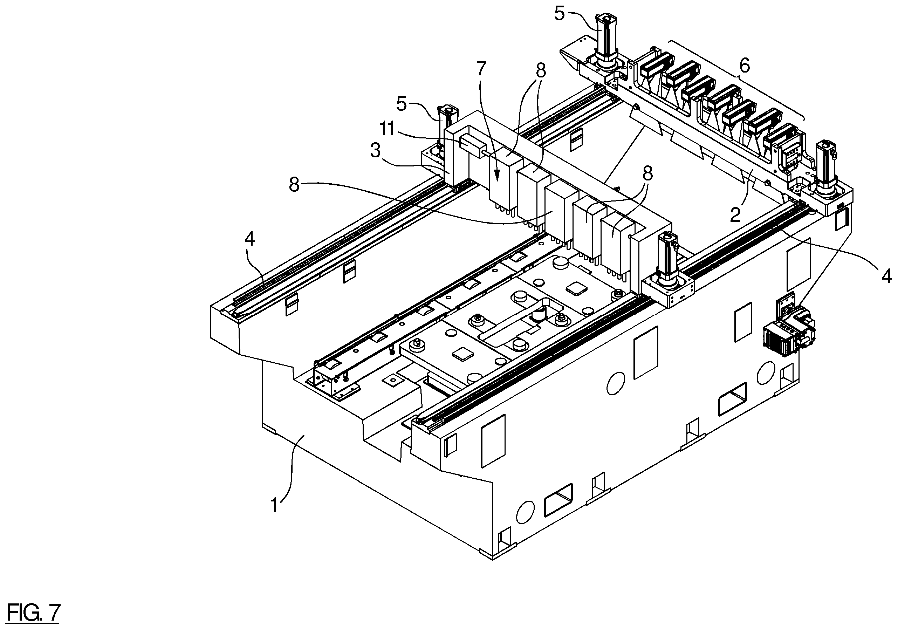

Die Fig. 7 zeigt eine Vorrichtung zur gerasterten Prozessanwendung an flächigen Objekten, bei der im Vergleich zu der in der Fig. 1 gezeigten Vorrichtung die Abtasteinrichtung 6 mehrere an der Abtastbrücke 2 angeordnete Triangulationssensoren aufweist, die jeweils nur einen Teil der Breite eines Objekts 15 an der Objektaufnahmeeinrichtung 12 erfassen, zusammen jedoch die ganze Breite. Somit können trotz der eingeschränkten Erfassungsbreite der Triangulationssensoren in dieser Ausgestaltung mit einer Längsfahrt der Abtastbrücke 2 Objektdaten für das gesamte Objekt 15 bestimmt werden. Weiterhin ist die Anwendungseinrichtung 7 der Vorrichtung nach Fig. 7 mit mehreren Drop-on-Demand-Druckköpfen 8 gebildet, die an der Anwendungsbrücke 3 relativ zueinander unbeweglich angeordnet und insgesamt in der Querrichtung verfahrbar sind.

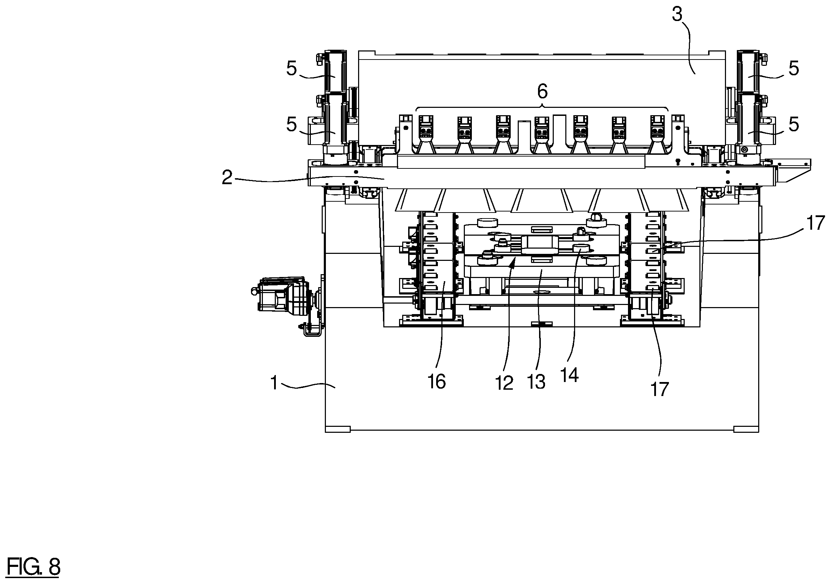

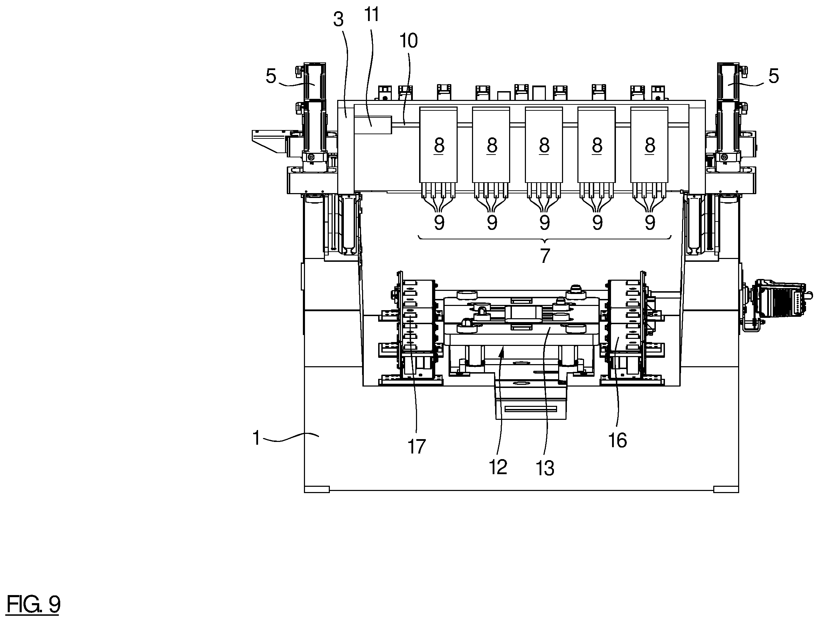

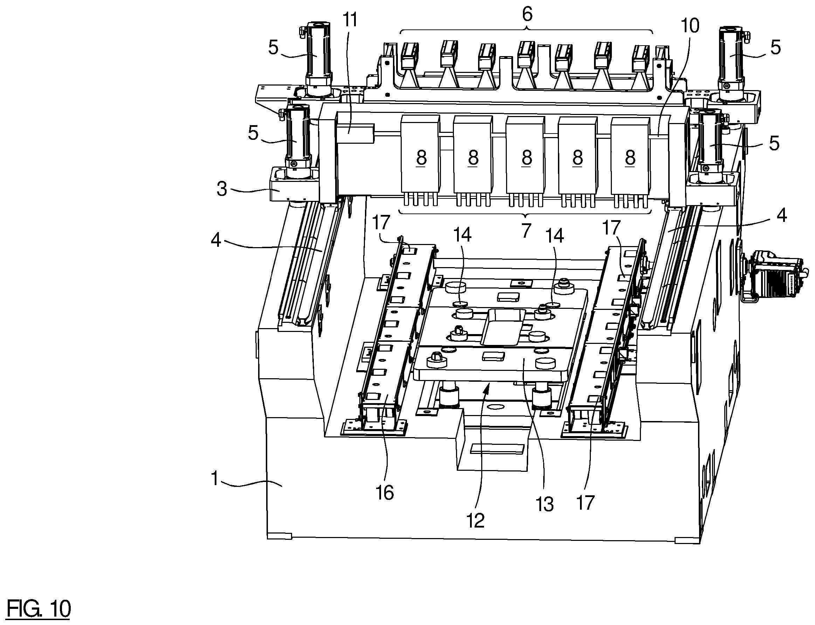

Die Figuren 8, 9 und 10 zeigen verschiedene Ansichten der Vorrichtung gemäß Fig. 7.

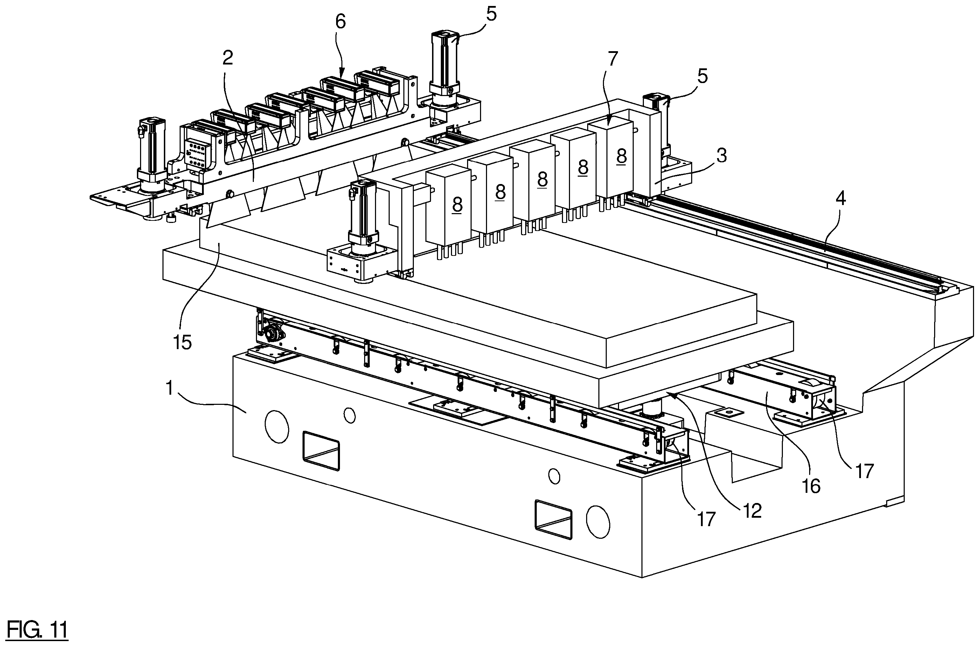

In der Fig. 11 ist die Vorrichtung der Fig 7 mit einer ausgeblendeten Seitenwand und einem an der Objektaufnahmeeinrichtung 12 aufgenommenen flächigen Objekt 15 gezeigt. Die Figu-ren 12 und 13 zeigen eine Frontal- sowie eine Rückansicht, in denen zu erkennen ist, dass das Objekt 15 mittels des Hubtischs 13 in einem geeigneten Abstand zu der Abtasteinrichtung 6 sowie der Anwendungseinrichtung 7 angeordnet ist.

In beispielhaften Ausführungen kann die Anwendungseinrichtung zwischen zehn und achtzig Druckköpfe aufweisen. Mittels der Druckköpfe kann die Breite des Objekts 15 in ein Raster mit einer definierten Rasterbreite geteilt sein, wobei dann über des Querzustellen der Anwendungseinrichtung 7 ein Abstand der Mittellinien der (Längs-)Drucklinien eingestellt werden kann.

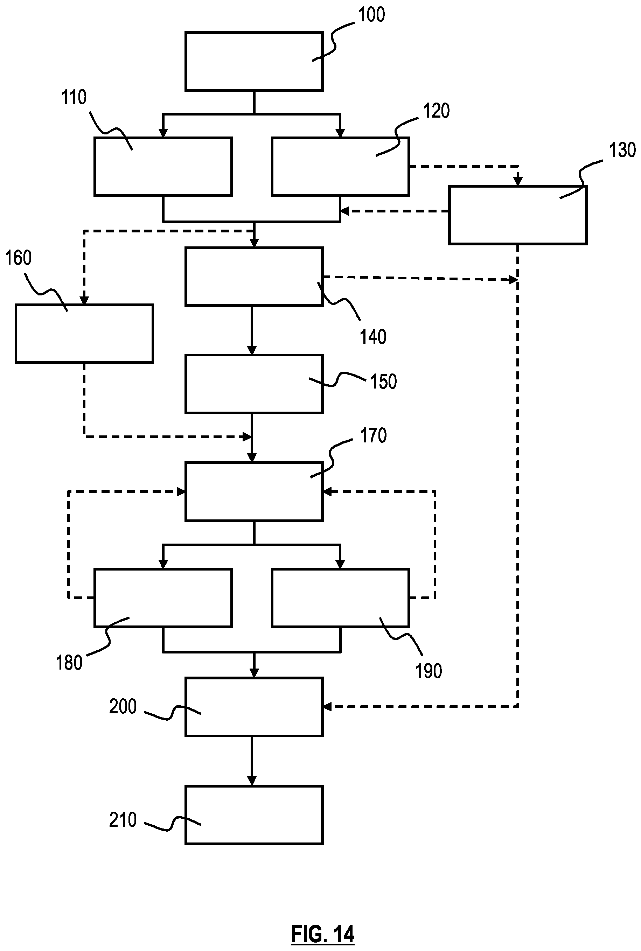

Die Darstellung der Fig. 14 veranschaulicht ein Verfahren zur gerasterten Prozessanwendung an flächigen Objekten. In einem ersten Schritt 100 wird ein einer Prozessanwendung (hier: Bedrucken) zu unterziehendes Objekt 15 einer Objektaufnahmeeinrichtung 12 einer Vorrichtung zugeführt und an dieser aufgenommen.

Anschließend wird das Objekt 15 in Schritt 110 mittels eines Hubtischs 13 in eine Anwendungsposition gebracht und indexiert. Parallel hierzu erfolgt in Schritt 120 eine automatisierte Identifikation des Objekts 15. Auf Basis der Identifikation können für die weiteren Verfahrensschritte Komponentendaten für das Objekt 15 bereitgestellt werden. Optional kann bei Fehlschlagen der Identifizierung in Schritt 120 eine manuelle Eingabe von Komponentendaten im Schritt 130 vorgesehen sein.

Im Schritt 140 wird dann mittels einer Abtasteinrichtung 6 gemäß den vorangehenden Ausführungen eine Positionierung (X- und Y-Versatz, Rotation) des Objekts 15 an der Objektaufnahmeeinrichtung 12 bestimmt. Hierauf wird in Schritt 150 ein vorgegebenes Druckbild geladen und eine Komponentenposition in Bezug auf das Druckbild berechnet.

Im bevorzugt vorgesehenen Schritt 160 ist vorgesehen, das Objekt 15 zu scannen und hierauf ein Druckbild zu generieren. In iterativen Verfahren (siehe hierzu auch nachfolgend) kann insbesondere vorgesehen sein, bei jedem Iterationszyklus das Druckbild ("Job" für Druckköpfe) anzupassen bzw. neu zu generieren, beispielsweise an die jeweilige individuelle Produktposition anzupassen.

Im Schritt 170 wird dann mittels einer Anwendungseinrichtung 7 wie zuvor im Einzelnen beschrieben Farbe auf das Objekt 15 aufgebracht, wobei hierbei das Druckbild in Übereinstimmung mit der zuvor bestimmten tatsächlichen Position des Objekts 15 und den entsprechenden Berechnungen erzeugt wird.

Im Schritt 180 wird mittels der Abtasteinrichtung 6 die Qualität des Druckbildes mittels Schichtdickenmessung bestimmt. Parallel hierzu erfolgt in Schritt 190 mittels der Abtasteinrichtung 6 eine Bestimmung der Qualität des Druckbildes auf Basis einer optischen Bestimmung des Benetzungszustands über einen Reflexionsgrad. Ergeben die Qualitätsprüfungen eine unzureichende Qualität, kann für eine Nachbearbeitung zum Schritt 170 zurückgekehrt werden. Insofern ist ein iteratives Verfahren geschaffen. In einem solchen iterativen Verfahren kann vorgesehen sein, dass die Qualitätsprüfung in den Schritten 180 und 190 eine Erfassung gemäß den Schritten 140, 150 und/oder 160 umfasst, so dass im iterativ ausgeführten Schritt 170 das Druckbild in Übereinstimmung mit einer aktuell bzw. neu bestimmten tatsächlichen Position des Objekts 15 und den entsprechenden Berechnungen erzeugt wird. Alternativ kann die Iterationsschleife vorsehen, dass, falls die Qualitätsprüfungen eine unzureichende Qualität ergibt, für eine Nachbearbeitung zum Schritt 140 (und ggf. parallel 160) zurückgekehrt wird.

Im Schritt 200 wird der Hubtisch 13 abgesenkt und das Objekt 15 freigegeben. Das Objekt 15 wird dann in Schritt 210 aus der Vorrichtung ausgegeben.

Sollte auch ein manuelles Eingeben von Komponentendaten in Schritt 130 fehlschlagen oder ein Bestimmen der Positionierung des Objekts in Schritt 140 fehlschlagen, kann vorgesehen sein, direkt zu Schritt 200 zu springen und das Objekt 15 ohne eine Prozessanwendung (Bedrucken) aus der Vorrichtung auszugeben.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Grundgestell
- 2: Abtastbrücke
- 3: Anwendungsbrücke
- 4: Linearführung
- 5: Servomotor
- 6: Abtasteinrichtung
- 7: Anwendungseinrichtung
- 8: Drop-on-Demand-Druckkopf
- 9: Druckdüsen
- 10: Linearführung
- 11: Servomotor
- 12: Objektaufnahmeeinrichtung
- 13: Hubtisch
- 14: Haltemittel
- 15: Objekt
- 16: Zuführeinrichtung
- 17: Rollen

- 100-210: Verfahrensschritte

## Patentansprüche

1. Vorrichtung zur gerasterten Prozessanwendung an flächigen Objekten, mit
- einem Grundgestell (1);
- einer Objektaufnahmeeinrichtung (12), welche an dem Grundgestell (1) angeordnet und eingerichtet ist, ein einer Prozessanwendung zu unterziehendes Objekt (15) während der Prozessanwendung relativ zu dem Grundgestell (1) unbewegt aufzunehmen;
- eine Abtastbrücke (2), welche sich in einer Querrichtung der Vorrichtung, welche quer zu einer Längsrichtung der Vorrichtung verläuft, zwischen gegenüberliegenden Seiten des Grundgestells (1) über der Objektaufnahmeeinrichtung (12) erstreckt;
- eine Anwendungsbrücke (3), welche sich in der Querrichtung zwischen gegenüberliegenden Seiten des Grundgestells (1) über der Objektaufnahmeeinrichtung (12) erstreckt; und
- eine Steuereinrichtung,
wobei
- an der Abtastbrücke (2) wenigstens eine Abtasteinrichtung (6) angeordnet ist, wobei
- die Abtasteinrichtung (6) eingerichtet ist, Objektdaten zu bestimmen, welche einen Parameter angeben, der einem Abtastabschnitt eines an der Objektaufnahmeeinrichtung (12) angeordneten Objekts (15) zugeordnet ist,
- der Abtastabschnitt sich über einen Teil der Länge der Objektaufnahmeeinrichtung (12) in der Längsrichtung erstreckt, und
- die Abtastbrücke (2) entlang der Längsrichtung über die Länge der Objektaufnahmeeinrichtung (12) verfahrbar ist;
- an der Anwendungsbrücke (3) wenigstens eine Anwendungseinrichtung (7) angeordnet ist, wobei
- die Anwendungseinrichtung (7) eingerichtet ist, einen Anwendungsabschnitt eines an der Objektaufnahmeeinrichtung (12) angeordneten Objekts (15) einer Prozessanwendung zu unterziehen,
- der Anwendungsabschnitt sich über einen Teil der Länge der Objektaufnahmeeinrichtung (12) in der Längsrichtung und über einen Teil der Breite der Objektaufnahmeeinrichtung (12) in der Querrichtung erstreckt,
- die Anwendungsbrücke (3) entlang der Längsrichtung über die Länge der Objektaufnahmeeinrichtung (12) verfahrbar ist, und
- die Anwendungseinrichtung (7) an der Anwendungsbrücke (3) in der Querrichtung über zumindest einen Teil der Breite der Objektaufnahmeeinrichtung (12) verfahrbar ist; und
- die Steuereinrichtung eingerichtet ist,
- die Abtastbrücke (2) und die wenigstens eine Abtasteinrichtung (6) so anzusteuern, dass die wenigstens eine Abtasteinrichtung (6) mittels der Abtastbrücke (2) in der Längsrichtung über die gesamte Fläche eines an der Objektaufnahmeeinrichtung (12) angeordneten Objekts (15) geführt wird und hierbei Objektdaten für das gesamte Objekt (15) bestimmt,
- aus den Objektdaten eine ortsaufgelöste Eigenschaft des Objekts (15) an der Objektaufnahmeeinrichtung (12) zu bestimmen, und
- die Anwendungsbrücke (3) und die wenigstens eine Anwendungseinrichtung (7) so anzusteuern, dass die Anwendungseinrichtung (7) gemäß der aus den Objektdaten bestimmten ortsaufgelösten Eigenschaft des Objekts (15) rasterartig über das Objekt (15) bewegt wird und hierbei sequentiell zur Anwendung bestimmte Punkte des Objekts (15) einer Prozessanwendung unterzieht, wobei die Bewegung der Anwendungseinrichtung (7) in Bahnen im Wesentlichen über die gesamte Länge des Objekts (15) in der Längsrichtung erfolgt und zwischen den Bahnen eine Zustellung der Anwendungseinrichtung (7) in der Querrichtung erfolgt.

2. Vorrichtung nach Anspruch 1, mit einer Zuführeinrichtung (16), welche eingerichtet ist, der Objektaufnahmeeinrichtung (12) ein einer Prozessanwendung zu unterziehendes Objekt (15) in der Längsrichtung zuzuführen.

3. Vorrichtung nach Anspruch 1 oder 2, Objektaufnahmeeinrichtung (12) Haltemittel (14) zur Fixierung eines einer Prozessanwendung zu unterziehenden Objekts (15) an der Objektaufnahmeeinrichtung (12) aufweist.

4. Vorrichtung nach einem der vorangehenden Ansprüche, wobei die Bewegung der Abtastbrücke (2), die Bewegung der Anwendungsbrücke (3) und/oder die Bewegung der Anwendungseinrichtung (7) mittels eines zugeordneten Servomotors entlang einer zugeordneten Linearführung erfolgt.

5. Vorrichtung nach einem der vorangehenden Ansprüche, wobei die wenigstens eine Abtasteinrichtung (6) eine optische Erfassungseinrichtung aufweist.

6. Vorrichtung nach einem der vorangehenden Ansprüche, wobei
- der Abtastabschnitt sich über einen Teil der Breite der Objektaufnahmeeinrichtung (12) in der Querrichtung erstreckt;
- die Abtasteinrichtung (6) an der Abtastbrücke (2) in der Querrichtung über zumindest einen Teil der Breite der Objektaufnahmeeinrichtung (12) verfahrbar ist; und
- die Steuereinrichtung eingerichtet ist, die Abtastbrücke (2) und die wenigstens eine Abtasteinrichtung (6) so anzusteuern, dass die wenigstens eine Abtasteinrichtung (6) in der Längsrichtung und in der Querrichtung rasterartig über die gesamte Fläche des an der Objektaufnahmeeinrichtung (12) angeordneten Objekts (15) geführt wird und hierbei Objektdaten für das gesamte Objekt (15) bestimmt.

7. Vorrichtung nach einem der vorangehenden Ansprüche, wobei die wenigstens eine Anwendungseinrichtung (7) einen Drop-on-Demand-Druckkopf (8) aufweist und eingerichtet ist, als Prozessanwendung einen jeweiligen Tintenpunkt an einem bestimmten Punkt eines einer Prozessanwendung zu unterziehenden Objekts (15) aufzubringen.

8. Vorrichtung nach Anspruch 7, mit mehreren Anwendungseinrichtungen (7), die entlang der Querrichtung nebeneinander angeordnet sind und jeweils einen Drop-on-Demand-Druckkopf (8) aufweisen, wobei die Steuereinrichtung eingerichtet ist, die Anwendungseinrichtungen (7) in Bahnen im Wesentlichen über die gesamte Länge des Objekts (15) in der Längsrichtung zu bewegen und zwischen den Bahnen eine Zustellung der Anwendungseinrichtungen (7) in der Querrichtung zu veranlassen, wobei die Drop-on-Demand-Druckköpfe (8) eingerichtet sind, als Prozessanwendung einen jeweiligen Tintenpunkt an einem jeweiligen bestimmten Punkt des Objekts (15) aufzubringen.

9. Vorrichtung nach einem der Ansprüche 1 bis 6, wobei die wenigstens eine Anwendungseinrichtung (7) eine Sonde aufweist, welche eingerichtet ist, als Prozessanwendung eine Datenerfassung an einem bestimmten Punkt eines einer Prozessanwendung zu unterziehenden Objekts (15) durchzuführen.

10. Vorrichtung nach einem der vorangehenden Ansprüche, wobei
- die wenigstens eine Abtasteinrichtung (6) weiterhin eingerichtet ist, weitere Objektdaten zu bestimmen, welche einen weiteren Parameter angeben, der dem Abtastabschnitt zugeordnet ist;
- die Steuereinrichtung eingerichtet ist, anschließend an die Prozessanwendung die Abtastbrücke (2) und die wenigstens eine Abtasteinrichtung (6) so anzusteuern, dass die wenigstens eine Abtasteinrichtung (6) mittels der Abtastbrücke (2) in der Längsrichtung über die gesamte Fläche des an der Objektaufnahmeeinrichtung (12) angeordneten Objekts (15) geführt wird und hierbei weitere Objektdaten für das gesamte Objekt (15) bestimmt; und
- die Steuereinrichtung weiter eingerichtet ist, anhand der weiteren Objektdaten zu bestimmen, ob die Prozessanwendung erfolgreich war.

11. Verfahren zur gerasterten Prozessanwendung an flächigen Objekten, umfassend
- Aufnehmen eines einer Prozessanwendung zu unterziehenden Objekts (15) an einer Objektaufnahmeeinrichtung (12), welche an einem Grundgestell (1) angeordnet ist, derart, dass das Objekt (15) unbewegt relativ zu dem Grundgestell (1) aufgenommen ist;
- Führen wenigstens einer Abtasteinrichtung (6), welche an einer Abtastbrücke (2) angeordnet ist, mittels der Abtastbrücke (2) in einer Längsrichtung über die gesamte Fläche des an der Objektaufnahmeeinrichtung (12) angeordneten Objekts (15), wobei
- die Abtastbrücke (2) sich in einer Querrichtung, welche quer zu der Längsrichtung verläuft, zwischen gegenüberliegenden Seiten des Grundgestells (1) über der Objektaufnahmeeinrichtung (12) erstreckt,
- die Abtasteinrichtung (6) eingerichtet ist, Objektdaten zu bestimmen, welche einen Parameter angeben, der einem Abtastabschnitt eines an der Objektaufnahmeeinrichtung (12) angeordneten Objekts (15) zugeordnet ist, und
- der Abtastabschnitt sich über einen Teil der Länge der Objektaufnahmeeinrichtung (12) in der Längsrichtung erstreckt;
- Bestimmen, während des Führens der Abtasteinrichtung (6) über die gesamte Fläche des Objekts (15), von Objektdaten für das gesamte Objekt (15);
- Bestimmen einer ortsaufgelösten Eigenschaft des Objekts (15) aus den Objektdaten;
- Bewegen wenigstens einer Anwendungseinrichtung (7), welche an einer Anwendungsbrücke (3) angeordnet ist, gemäß der aus den Objektdaten bestimmten ortsaufgelösten Eigenschaft des Objekts (15) rasterartig über das Objekt (15), wobei die Bewegung der Anwendungseinrichtung (7) in Bahnen im Wesentlichen über die gesamte Länge des Objekts (15) mittels der Anwendungsbrücke (3) in der Längsrichtung erfolgt und zwischen den Bahnen eine Zustellung der Anwendungseinrichtung (7) an der Anwendungsbrücke (3) in der Querrichtung erfolgt, wobei
- die Anwendungsbrücke (3) sich in der Querrichtung zwischen gegenüberliegenden Seiten des Grundgestells (1) über der Objektaufnahmeeinrichtung (12) erstreckt,
- die Anwendungseinrichtung (7) eingerichtet ist, einen Anwendungsabschnitt eines an der Objektaufnahmeeinrichtung (12) angeordneten Objekts (15) einer Prozessanwendung zu unterziehen, und
- der Anwendungsabschnitt sich über einen Teil der Länge der Objektaufnahmeeinrichtung (12) in der Längsrichtung und über einen Teil der Breite der Objektaufnahmeeinrichtung (12) in der Querrichtung erstreckt; und
- sequentielles Unterziehen von zur Anwendung bestimmten Punkten des Objekts (15) einer Prozessanwendung.

12. Verfahren nach Anspruch 11, umfassend, anschließend an die Prozessanwendung,
- Führen der Abtasteinrichtung (6) mittels der Abtastbrücke (2) in der Längsrichtung über die gesamte Fläche des Objekts (15);
- hierbei Bestimmen weiterer Objektdaten für das gesamte Objekt (15) mittels der Abtasteinrichtung (6), wobei die weiteren Objektdaten einen weiteren Parameter angeben, der dem Abtastabschnitt zugeordnet ist; und
- Bestimmen, anhand der weiteren Objektdaten, ob die Prozessanwendung erfolgreich war.

13. Verfahren nach Anspruch 12, umfassend, in Reaktion auf das Bestimmen ob die Prozessanwendung erfolgreich war:
- falls die Prozessanwendung nicht erfolgreich war, iteratives Wiederholen des Bewegens der wenigstens einer Anwendungseinrichtung (7), des sequentielles Unterziehens von zur Anwendung bestimmten Punkten des Objekts (15) einer Prozessanwendung, und des Bestimmens ob die Prozessanwendung erfolgreich war; und
- falls die Prozessanwendung erfolgreich war, Beenden der Prozessanwendung.
